Europäisches Patentamt

(19) European Patent Office (11) Numéro de publication : **0 008 329**

Office européen des brevets **B1**

(12) **FASCICULE DE BREVET EUROPÉEN**

(45) Date de publication du fascicule du brevet : (51) Int. Cl.³ : **G 02 B   7/26**
23.12.81

(21) Numéro de dépôt : **79102008.4**

(22) Date de dépôt : **18.06.79**

(54) **Dispositif de connexion de fibres optiques.**

(30) Priorité : **21.08.78 US 935434**

(43) Date de publication de la demande :
**05.03.80 (Bulletin 80/05)**

(45) Mention de la délivrance du brevet :
**23.12.81 Bulletin 81/51**

(84) Etats contractants désignés :
**CH DE FR GB SE**

(56) Documents cités :
**US - A - 3 948 582**
**US - A - 3 999 837**

**REVIEW OF THE ELECTRICAL COMMUNICATION LABORATORIES, vol. 26, n° 5-6, mai-juin 1978, pages 693-700, Tokyo JP**
**N. SUZUKI et al. : « New Connectors for an Experimental Optical Fiber Transmission System »**

(73) Titulaire : **International Business Machines Corporation**

**Armonk, N.Y. 10504 (US)**

(72) Inventeur : **Uberbacher, Edward Charles**
**8708 Cliff Top Ct.**
**Raleigh, NC 27612 (US)**

(74) Mandataire : **Bonin, Jean-Jacques**
**COMPAGNIE IBM FRANCE Département de Propriété Industrielle**
**F-06610 La Gaude (FR)**

Imprimerie Jouve, 17, rue du Louvre, 75001 Paris, France

Dispositif de connexion de fibres optiques

## Description

### Domaine Technique

La présente invention concerne en général les connecteurs de chemins optiques et plus particulièrement les connexions dans les systèmes de communication de données par fibres optiques.

Ces dernières années ont vu une grande partie de l'industrie adopter une large gamme de connecteurs optiques. Ces connecteurs ont été utilisés dans les faisceaux à multi-fibres, les canaux à fibre unique et aux embouts de connexion des canaux où des sources ou des détecteurs lumineux sont installés.

L'objectif principal de tous les connecteurs optiques est d'assurer un alignement précis de deux petites fibres de transmission optique sans perte de lumière excessive. La séparation entre les extrémités des fibres doit être réduite ou éliminée, le décalage des extrémités des fibres l'une par rapport à l'autre, même dans le même plan, doit être réduit ou éliminé et toute angularité ou différence d'angularité à proximité de la jointure des fibres doit être réduite dans la mesure du possible pour assurer une interconnexion ne dissipant qu'une faible quantité de l'énergie lumineuse transmise.

Une approche classique de l'art antérieur pour faciliter la connexion des fibres avec la précision désirée, consiste à placer un manchon connecteur autour de l'extrémité des fibres, et à fixer entre eux les manchons des fibres que l'on désire raccorder. Cette réalisation pose de nouveaux problèmes. Tout d'abord, le manchon doit présenter un diamètre intérieur correspondant précisément au calibre de la fibre utilisée. Etant donné que de nombreuses fibres de calibres différents sont habituellement utilisées, il faut prévoir un grand nombre de manchons à diamètre intérieur précis. De plus, les profils intérieur et extérieur du manchon doivent être strictement coaxiaux, étant donné que c'est la partie externe du manchon qui porte les éléments mécaniques servant à aligner les fibres.

Une autre approche, illustrée par le brevet US-A-3 948 582, consiste à interposer un raccord commun creux entre les manchons des fibres à connecter.

Dans ce brevet, chaque fibre est fixée à une douille montée à l'intérieur d'un manchon, la douille ayant une extrémité conique d'où émerge sur une certaine longueur l'extrémité de la fibre. Le raccord comprend un canal axial de section sensiblement identique à celle des fibres, avec une portion plus évasée aux extrémités dans laquelle vient s'emboîter la partie conique des douilles lorsque le raccord est lui-même emboîté dans les manchons, les extrémités des fibres étant alors complètement engagées dans le canal axial du raccord. Le verrouillage de l'assemblage se fait grâce à des systèmes classiques à baïonnette.

Ce dispositif de connexion comporte notamment les inconvénients ci-après :

— l'extrémité libre des fibres n'est pas bien protégée lorsque le manchon n'est pas assemblé avec le raccord : en effet le diamètre intérieur du manchon est notablement plus grand que celui des fibres, et la protection qu'il offre est donc limitée,

— le système d'assemblage à baïonnette ne permet pas d'avoir les extrémités des deux fibres exactement en contact à l'intérieur du raccord.

La présente invention a pour objet un dispositif de connexion de fibres optiques universel, de conception simple, de montage aisé, ne nécessitant que très peu d'éléments de grande précision, et ne comportant pas les inconvénients qui viennent d'être signalés.

Dans un mode de réalisation particulier, le dispositif de connexion selon l'invention comporte essentiellement un raccord creux dont les extrémités viennent s'emboîter dans deux connecteurs comprenant chacun un logement tubulaire dans lequel est montée fixement l'extrémité d'une fibre. Le raccord comporte un canal axial dont la section correspond à celle des fibres. Dans le logement tubulaire de chaque connecteur est montée coulissante une douille creuse qui, lorsque le raccord n'est pas emboîté dans le connecteur, recouvre l'extrémité libre de la fibre grâce à la présence de moyens de rappel élastiques disposés entre la douille et le logement tubulaire. Lorsqu'on emboîte le raccord dans le connecteur, le raccord pousse la douille vers l'intérieur du logement à l'encontre des moyens de rappel et découvre l'extrémités de la fibre qui pénètre alors dans le canal axial du raccord, dont les extrémités sont légèrement évasées, pour mieux guider la fibre. Le raccord comporte une collerette centrale contre laquelle viennent buter les bords avant des logements des connecteurs. Cette butée limite ainsi précisément la profondeur d'introduction du raccord dans les connecteurs et permet d'avoir les extrémités des deux fibres exactement en contact à l'intérieur du raccord : pour cela il suffit que l'extrémité de la fibre soit disposée avec précision par rapport au bord avant de son logement, ce qui ne pose aucun problème technique particulier.

L'invention peut également être mise en œuvre dans un autre mode de réalisation dans lequel le raccord et les connecteurs sont adaptés pour connecter des câbles multifibres et où les fibres sont alors connectées deux à deux.

D'autres objets, caractéristiques et avantages de la présente invention ressortiront mieux de l'exposé qui suit, fait en référence aux dessins annexés à ce texte, qui représentent dès modes de réalisation préférés de celle-ci.

La figure 1 est une vue en coupe d'une réalisation préférée de la présente invention montrant les organes de logement et de support du conducteur à fibre optique et le raccord associé.

La figure 2 représente le dispositif de connexion de la figure 1 lorsque les éléments sont engagés les uns dans les autres.

La figure 3 représente une réalisation préférée du raccord de connexion des figures 1 et 2 normalement associé aux organes de logement et de support de fibre optique.

La figure 4 représente une autre réalisation possible du dispositif de la présente invention à utiliser avec des câbles composés de plusieurs fibres optiques.

La figure 5 représente une réalisation préférée d'un raccord à utiliser avec les organes de support et de logement du câble à fibres optiques multiples de la figure 4.

La figure 6 est une représentation schématique agrandie des éléments du connecteur des figures 4 et 5 qui montre la contrainte exercée sur les fibres optiques afin d'assurer un contact précis entre celles-ci et les surfaces de guidage du connecteur.

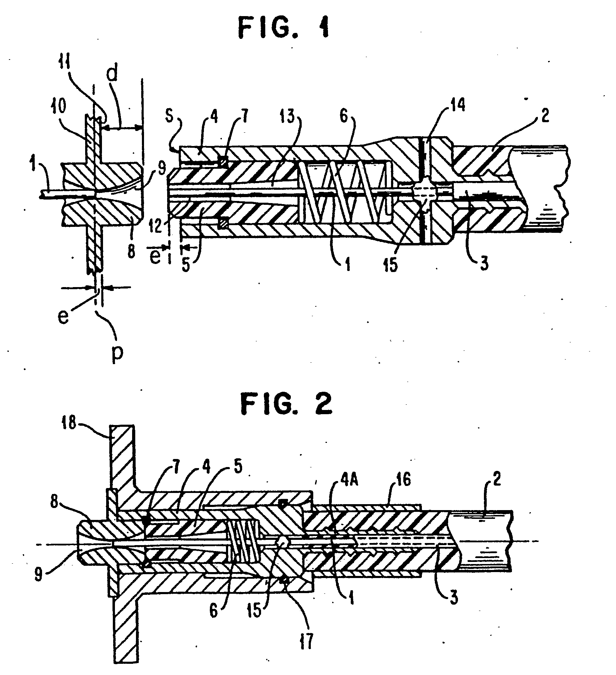

Une réalisation préférée de la présente invention est représentée à la figure 1 qui est une vue en coupe schématique. La structure représentée a pour but de supporter, de guider et d'amener en position de butée permettant la transmission optique, une ou plusieurs fibres optiques dont le diamètre est de l'ordre de celui d'un cheveu. Le connecteur représenté peut être fabriqué en grande série sans requérir de contrôle dimensionnel précis des divers éléments, ce qui permet au dispositif de connexion d'être fabriqué en respectant des tolérances dimensionnelles classiques permettant son utilisation avec une gamme étendue de fibres de diamètres différents sans modification de l'équipement. Les exigences dimensionnelles normales concernant la précision du contrôle de la coaxialité des composants sont éliminées dans le connecteur de la présente invention, ce qui entraîne une réduction de son coût de fabrication et d'assemblage.

Dans la figure 1, la fibre optique 1 peut être une fibre de verre ou en plastique d'un type connu dans l'art antérieur. La fibre 1 est contenue dans un câble formé d'une gaine de plastique de protection extérieure 2 et d'un isolant intérieur en plastique 3. Une certaine longueur de fibre nue est contenue dans un logement 4 et une douille coulissante en plastique 5 pour supporter, guider et protéger la fibre optique.

La douille coulissante 5 est sollicitée vers l'extérieur du corps du logement 4 par un ressort 6 comme on le voit dans la figure. Une bague de retenue 7 limite la course vers l'extérieur de la douille de protection et de support 5 en portant contre un épaulement de ladite douille comme on le voit dans la figure. L'évidement 12 de la douille présente un diamètre supérieur au diamètre de la fibre 1 si bien qu'un certain nombre de fibres de diamètres différents peuvent être utilisées et qu'on dispose ainsi d'un support à coulissement libre à l'extrémité de la fibre. Le câble est introduit dans le logement 4 jusqu'à ce que l'extrémité libre de la fibre optique fasse saillie à l'extrémité du logement sur une longueur fixée avec précision, puis une certaine quantité d'adhésif à durcissement rapide 15 est injectée dans le canal 14 pour fixer la fibre en position par rapport au logement 4.

Un élément de raccordement de précision est représenté à la gauche de l'ensemble principal dans la figure 1. Ce raccord 8 présente une collerette 10 dont la demi-épaisseur est référencée « e » et une partie saillante dont la longueur est référencée « d ». A l'intérieur de ce raccord, on trouve un passage dont le diamètre de la partie centrale doit être suffisamment précis pour recevoir la fibre 1. Une fibre 1 correspondante est représentée à la gauche du raccord et introduite jusqu'au point milieu du passage intérieur du raccord. Le passage intérieur du raccord présente une ouverture évasée 9 de façon que divers décalages angulaires ou déplacements latéraux de l'extrémité libre de la fibre optique 1 puissent être permis lorsque le raccord 8 est introduit dans le logement 4. Bien que n'importe quel matériau approprié puisse être utilisé pour la composition des divers éléments décrits jusqu'ici, dans le présent exemple, le logement 4 est métallique, la douille de support et de protection 5 est en plastique moulé comme le sont également le raccord 8 et sa collerette 10. Le passage intérieur du raccord 8 peut être chemisé avec un tube de verre d'un diamètre précis évasé à son extrémité pour former l'entrée 9.

On observera que jusqu'à ce que l'extrémité S du logement 4 porte contre la surface de référence 11 de la collerette 10 du raccord, le mouvement relatif du logement 4 sur la longueur d du raccord pour arriver en butée contre la collerette 10 provoque l'entraînement de la douille coulissante 5 vers la droite dans la figure 1, à l'encontre de la force exercée par le ressort 6. La longueur sur laquelle la fibre 1 fait saillie depuis l'extrémité S du logement 4 doit ainsi être soigneusement contrôlée à l'assemblage du câble et du logement. Cette longueur doit être égale à la distance entre le plan médian P du raccord 8 et la surface de référence 11 de la collerette, c'est-à-dire doit être égale à la demi-épaisseur e de la collerette 10. Une petite longueur supplémentaire de fibre pourra être tolérée étant donné que la longueur libre et non supportée de fibre 1 dans le logement 4 peut se déformer et assurer un contact approprié des deux fibres au centre du passage intérieur du raccord.

Afin de mieux protéger l'extrémité libre de la fibre 1, il est préférable que la douille 5 fasse également saillie hors du logement 4 d'une longueur égale ou supérieure à e.

Il apparaît ainsi que le seul élément de précision est le raccord à collerette qui peut être formé d'une matière plastique moulée avec précision et chemisée avec un élément en plastique, en métal ou en verre dont le diamètre sera contrôlé avec précision pour correspondre exactement au diamètre de la fibre optique 1 qu'il recevra.

En passant à la figure 2, on voit que l'ensemble de la figure 1 est présenté ici avec le logement 4 amené en butée contre le raccord 8 et que l'ensemble est logé dans un carter extérieur 18. Le carter extérieur 18 peut faire fonction de manchon de montage pour assurer le maintien des divers éléments en place lorsqu'ils sont raccordés les uns aux autres ou permettre le raccordement d'un câble à fibre optique à des structures d'émission ou de détection de lumière. On observera dans la figure 2 que la douille de support et de protection coulissante 5 a été décalée vers la droite en comprimant le ressort 6 et que la fibre 1 est placée et guidée dans le passage évasé 9 du raccord de façon que son extrémité gauche se trouve au point milieu exact du passage intérieur du raccord 8. Dans cette position, la fibre 1, peut être raccordée dans d'excellentes conditions avec une fibre montée dans un connecteur similaire emboîté sur la partie gauche du raccord 8.

Sur la figure 2 on peut voir également un moyen d'arrêt 17 qui peut être une bague de retenue en caoutchouc ou un système de billes et ressorts, et destiné à maintenir l'ensemble de connexion dans le carter 18. Un autre manchon 16 en métal ou en tout autre matériau est disposé autour du câble 2 pour assurer un serrage étroit entre le câble 2 et le prolongement 4A du logement 4 lorsque ce dernier pénètre dans le corps du câble à fibres optiques 2 entourant le noyau contenant la fibre optique 1. Le manchon métallique extérieur 16 peut être serti pour assurer un raccordement serré du câble 2 au logement 4 par l'intermédiaire de la partie crantée ou filetée qui est solidaire du logement 4.

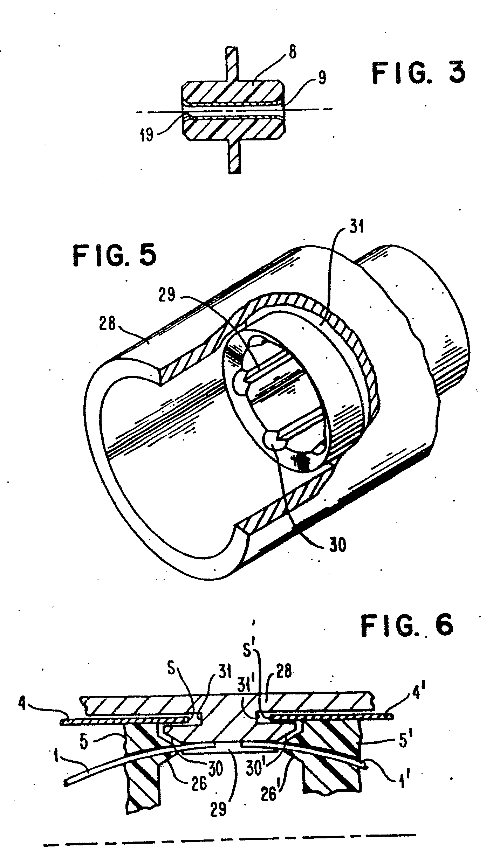

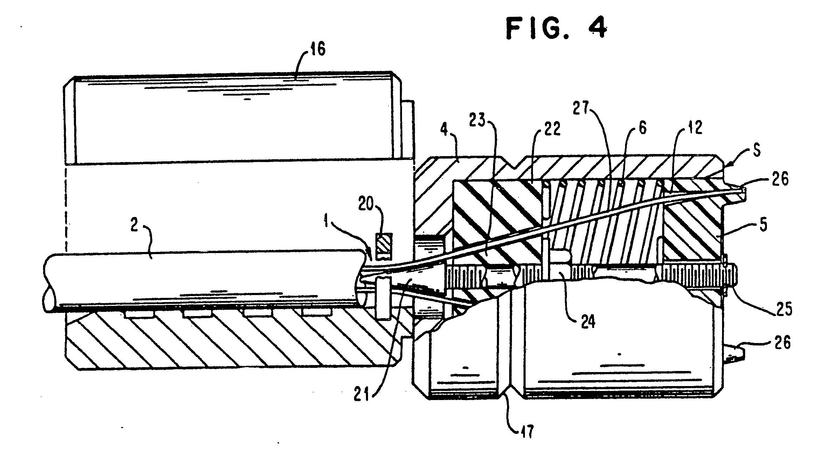

La figure 3 représente un raccord 8 comportant une chemise de verre intérieure de précision 19 à extrémités évasées 9. L'utilisation d'une chemise de verre évasée 19 permet de réaliser une entrée de dimensions précises, lisse et sans interférence, usinée avec précision à son diamètre final, au centre du raccord 8. De cette manière, le seul paramètre du raccord 8 qui doit être soigneusement contrôlé en fabrication est l'épaisseur de la collerette elle-même qui limite la profondeur de l'introduction de la fibre 1 lorsque le logement 4 est amené en butée contre le raccord 8.

La figure 4 représente une autre réalisation possible du dispositif de la présente invention qui pourrait être utilisée avec des câbles à multifibres optiques plats ou ronds. Un câble à fibres optiques 2 comportant plusieurs fibres optiques 1 est représenté sur la figure. Les fibres optiques 1 sont séparées par un diviseur en étoile 20 associé à un séparateur conique 21 pour créer un faisceau de fibres divergent 27. Les fibres du faisceau 27 passent au travers d'un élément de retenue en caoutchouc (ou en tout autre matériau similaire) 22 et 23 comme on le voit dans la figure. Ces éléments coincent les fibres 1 et les maintiennent sous la forme de faisceau qui leur est donné par le diviseur 20 associé au séparateur 21. Les fibres 1 sont bloquées en position en tournant l'écrou 24 pour comprimer la couronne de caoutchouc 23 dans le passage conique ménagé au centre du bloc 22.

Les fibres traversent des passages 12 ménagés dans une douille de protection et de support coulissante 5 similaire à celle représentée dans les figures précédentes. La douille de protection coulissante 5 comporte des tétons de guidage 26 à raison d'un pour chaque fibre. Ces tétons sont disposés à l'embouchure de chaque passage 12 prévu pour chaque fibre dans la douille de support et de protection 5 et sont percés pour permettre le passage desdites fibres. Pour une raison qui sera explicitée plus loin, ces trous ont une légère inclinaison par rapport à l'axe du connecteur de façon à conserver au faisceau de fibres une forme légèrement tronconique à ce niveau. Un ressort de rappel 6 et une certaine longueur libre de chaque fibre du faisceau 27 sont également représentés. Un élément fileté central 25 peut être utilisé si on le désire pour faciliter l'assemblage des divers éléments. Une gorge 17 est usinée dans le logement 4 de la figure 4 pour être utilisée en association avec une bague de retenue ou une structure à ressort et à billes. Un élément de fixation de câble 16 en métal ou en tout autre matériau approprié est utilisé avec le câble 2 et le séparateur 20, et porte contre le logement 4 lorsque l'écrou 24 est serré. Un autre élément de fixation fileté est utilisé pour bloquer l'élément 16 et est associé dans ce but avec une surface de blocage circulaire ou plate suivant qu'un câble à multi-brins rond ou plat est utilisé.

Pendant l'assemblage, une certaine longueur de chaque fibre 1 est dénudée et introduite dans le dispositif comme on le voit dans la figure 4. Un outil est utilisé pour couper simultanément toutes les fibres pendant que la douille de protection et de retenue coulissante est légèrement enfoncée contre le ressort 6 pour que les extrémités des fibres fassent saillie sur une distance fixe et contrôlée avec précision depuis la surface de l'extrémité S du logement 4 comme dans le cas de la réalisation à câble à fibre unique.

La figure 5 représente un raccord associé 28 à utiliser avec le logement de câble à multi-brins de la figure 4. Ce raccord 28 comporte des canaux de guidage intérieurs multiples 29, un canal de guidage étant prévu pour chaque fibre. Les canaux de guidage tendent à aligner les fibres venant des extrémités opposées du raccord 28. Les canaux 29 présentent une extrémité évasée 30 fonctionnant en association avec les tétons 26 disposés à l'extrémité de la douille 5 disposée dans chaque logement 4. La surface d'extrémité S du logment 4 est prévue pour porter contre la surface 31 lorsque le raccord 28 est poussé contre le logement. La douille de support et de protection de fibres 5 telle qu'on la voit dans la figure 4 est conçue de façon à provoquer une certaine déformation des fibres 1 et en conséquence, pour leur appliquer une certaine contrainte. Le raccord associé 28 participe en outre à la création de cette déformation et à l'application de cette contrainte par l'action exercée par ses canaux de guidage 29 sur les extrémités libres des fibres 1. On voit mieux cet effet dans la figure 6 qui est une vue en coupe partielle agrandie de l'ensemble décrit à l'instant.

Dans la figure 6, on a représenté deux douilles de support et de protection de câble optique à fibres séparées 5 et 5' arrivant de gauche et de droite dans le raccord 28. Les extrémités libres des fibres 1 et 1' sont mises en place grâce à la coopération entre les têtons 26 et les évasements de guidage 30. En effet, après que les têtons, 26 et 26' sont venus buter contre les évasements 30 et 30', les douilles de protection et de support 5 et 5' coulissent dans chacun de leurs logements 4 et 4' si bien que les fibres 1 et 1' continuent à glisser au travers des têtons 26 et 26' et à pénétrer dans les canaux 29 du raccord 28. L'introduction totale des extrémités des fibres se termine lorsque les extrémités S et S' des logements 4 et 4' entrent en contact avec les surfaces 31 et 31' du raccord 28 comme indiqué précédemment.

Les canaux de guidage en V 29 représentés dans la réalisation préférée de la présente invention sont agencés de façon que la distance entre le fond des gorges formant les canaux et l'axe du raccord soit légèrement inférieure à la distance entre l'extrémité libre des fibres lorsqu'elles débouchent des têtons 26 et ce même axe. Ceci signifie que les fibres 1 se courbent légèrement en suivant les canaux de guidage 29 et qu'une certaine contrainte leur est appliquée. Ces contraintes tendent à maintenir les fibres 1 au fond de chacun des canaux 29 pour assurer un alignement précis dans le raccord 28. Un contrôle précis de la longueur des fibres 1 dépassant l'extrémité S de chaque logement 4 à l'assemblage du câble dans le logement permettra de régler la profondeur d'introduction des fibres et par là même d'assurer le contact des extrémités de chaque fibre au milieu du raccord 28. Un léger excès de la longueur de fibre en saillie pourra être compensé par la longueur de fibre libre et non supportée 27 représentée dans la figure 4.

Chacun des logements présente un passage axial central comme on le voit dans les figures, qui se prolonge dans le raccord. La douille coulissante à la fois supporte et protège les extrémités libres des fibres lorsque le connecteur n'est pas en fonction. Ainsi les extrémités libres des fibres peuvent être facilement guidées au voisinage des ouvertures évasées ménagées dans les raccords associés et ce, d'une manière précise et facilement contrôlée. Une fois que l'introduction initiale de chacune des fibres dans l'ouverture appropriée a été effectuée, les surfaces des canaux de guidage, assurent le guidage de l'extrémité libre des fibres et les amène en butée précise contre les éléments associés dans le raccord. Les têtons de guidage 26 dans le cas de la réalisation à multi-fibres assurent le guidage des fibres dans le raccord à multi-fibres 28 grâce à leur surface extérieure conique fonctionnant en association avec les évasements 30 des canaux 29 du raccord 28 comme on le voit dans les figures.

Ainsi, tandis qu'on a représenté un ensemble divergent initial de fibres individuelles dans le logement 4 de la figure 4, un ensemble convergent de fibres avec une divergence ultérieure à l'intérieur d'un raccord de connexion 28 pourrait être également envisagé étant donné que ce sont la déformation et la flexion des fibres 1 qui sont à obtenir. Une certaine différence entre le rayon de la circonférence de l'ensemble formé par les extrémités libres et non supportées des fibres et le rayon de la circonférence de l'ensemble finalement raccordé doit être prévu pour l'application de ces contraintes.

On pourra observer que l'ensemble de fibres optiques décrit ici peut être facilement fabriqué en grande quantité et à bon marché étant donné que les seuls éléments de précision impliqués sont dans le cas d'un connecteur à fibre unique, le diamètre du passage intérieur et l'épaisseur de la collerette qui sépare les deux extrémités des ensembles de connexion. En ce qui concerne le connecteur à multi-fibres, on trouve les mêmes éléments de précision à l'exception du fait que la longueur totale du raccord 28 ou d'une collerette si celle-ci est utilisée, doit être contrôlée. Les canaux en V n'ont pas à être d'une grande précision comme on le voit dans le raccord 28 étant donné que la déformation appliquée par les canaux de guidage 29 aux extrémités libres des fibres 1 permet à des fibres rondes d'un diamètre quelconque de se trouver en alignement précis avec d'autres sans requérir d'alésages précis comme dans le cas des connecteurs à fibre unique.

Bien que l'on ait décrit dans ce qui précède et représente sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

## Revendications

1. Dispositif de connexion de fibres optiques du genre comprenant :

— un premier connecteur comprenant un logement tubulaire (4) dans lequel est montée longitudinalement au moins une première fibre optique (1), l'extrémité de cette fibre optique étant disposée au voisinage de l'extrémité de connexion dudit connecteur,

— un second connecteur identique audit premier connecteur comprenant au moins une seconde fibre optique à connecter à la première, et

— un raccord (8) comprenant deux parties tubulaires identiques adaptées pour venir s'emboîter dans lesdits logements tubulaires respectifs desdits premier et second connecteurs et comportant un canal axial pour assurer le guidage et l'alignement des fibres à connecter, caractérisé en ce que chacun desdits connecteurs comporte :

— des moyens (15) pour monter fixement ladite fibre (1) dans ledit logement tubulaire (4), avec l'extrémité libre de cette fibre disposée à une distance prédéterminée (e), comptée longitudinalement, d'une surface de référence (S) dudit logement,

— une douille (5) de guidage et de protection pour la fibre, munie d'un canal axial de guidage (12), montée coulissante longitudinalement à l'intérieur dudit logement tubulaire (4) entre une première position où l'extrémité de la fibre est à l'intérieur de ladite douille et une seconde position où cette extrémité est dégagée de ladite douille,

— des moyens de rappel élastiques (6) entre ladite douille (5) et ledit logement (4) tendant à pousser ladite douille en direction de ladite extrémité de connexion dudit logement, afin de protéger l'extrémité de la fibre lorsque le raccord n'est pas emboîté dans le connecteur, et

— une butée (7) pour empêcher ladite douille (5) de s'échapper dudit logement (4) sous l'action desdits moyens de rappel (6),

et en ce que ledit raccord (8) comporte :

— des moyens pour déplacer la douille entre lesdites première et seconde positions lorsqu'il est emboîté dans le connecteur et dégager ainsi l'extrémité de la fibre pour que celle-ci puisse pénétrer dans le canal axial dudit raccord, et

— deux surfaces de référence (11) susceptibles de venir buter contre les surfaces de référence (S) respectives des logements tubulaires des deux connecteurs lorsqu'on emboîte lesdites parties tubulaires dudit raccord dans lesdits logements (4), lesdites surfaces de référence dudit raccord étant conçues et disposées de façon que, lorsque ledit raccord (8) est complètement emboîté dans lesdits logements (4) avec les surfaces de référence du raccord et des logements en butée, les extrémités des fibres des deux connecteurs soient exactement en contact.

2. Dispositif selon la revendication 1, caractérisé en ce que chacun desdits connecteurs ne comporte qu'une seule fibre (1) disposée axialement dans ledit logement (4) et ladite douille (5), et

— le canal axial dudit raccord (8) a une section qui est sensiblement identique à celle des fibres à connecter au voisinage du plan médian (p) du raccord, et qui s'agrandit vers les extrémités du raccord de façon à former des surfaces de guidage (19) pour les fibres lorsqu'on emboîte le raccord dans les logements des connecteurs.

3. Dispositif selon la revendication 2, caractérisé en ce que :

— les sections droites dudit canal axial du raccord (8) et dudit canal de guidage (12) de ladite douille (5) sont circulaires, et

— le diamètre extérieur de l'embouchure du canal de guidage de ladite douille est inférieur au diamètre intérieur de l'embouchure du canal axial dudit raccord (8).

4. Dispositif selon la revendication 1, dans lequel chaque connecteur est monté sur un câble multifibre (2, figure 4), caractérisé en ce que :

— il comporte des moyens d'écartement et de guidage (22, 23) pour former un faisceau de fibres (27) de forme générale conique à partir du faisceau de fibres sortant du câble multifibre,

— ladite douille (5) comporte autant de canaux de guidage (12) qu'il y a de fibres, répartis sur sa périphérie conformément à la section dudit faisceau de fibres, lesdits canaux étant légèrement inclinés par rapport à l'axe de la douille de façon à conserver au faisceau de fibres une forme légèrement conique, et

— ledit raccord (28, figure 6) comporte un canal axial de forme générale cylindrique, dans les parois duquel sont disposées des rainures longitudinales (29), la distance entre le fond desdites rainures et l'axe dudit raccord étant légèrement inférieure au rayon du cercle que définiraient les extrémités libres dudit faisceau de fibres en l'absence dudit raccord et si on enfonçait ladite douille dans ledit logement d'une longueur égale à la course maximale qu'elle a lorsque le raccord est complètement emboîté.

5. Dispositif selon la revendication 4, caractérisé en ce que ledit logement (4) et ledit raccord (28) comportent des éléments de guidage angulaire mutuels (26, 30) pour assurer la mise en regard des extrémités libres des fibres de chacun des connecteurs avec les rainures correspondantes du raccord.

6. Dispositif selon la revendication 5, caractérisé en ce que :

— ladite douille (5) comporte des tétons (26) de forme tronconique sur la plus petite base desquels débouchent respectivement lesdits canaux de guidage (12) des fibres, et

— ledit raccord (28) comporte des évidements (30) de forme correspondante aux extrémités desdites rainures (29) pour coopérer avec lesdits tétons (26) au moment de l'emboîtement dudit raccord dans lesdits logements et assurer le positionnement angulaire approprié entre ces éléments.

7. Dispositif selon l'une quelconque des revendications précédentes, caractérisé en ce que :

— la surface de référence (S) dudit logement est constituée par le bord extérieur dudit logement (4) situé à l'extrémité de connexion dudit connecteur, et

— les surfaces de référence (11) dudit raccord (8) sont constituées par les deux faces d'une collerette extérieure (10) perpendiculaire à l'axe du raccord, dont le plan médian (p) est confondu avec le plan médian du raccord.

8. Dispositif selon la renvendication 7, caractérisé en ce que chaque fibre est montée dans le connecteur de façon à faire saillie par rapport à la surface de référence (S) dudit logement d'une longueur (e) égale à la moitié de l'épaisseur de ladite collerette.

9. Dispositif selon l'une quelconque des revendications précédentes, caractérisé en ce que l'extrémité externe de ladite douille (5) et l'extrémité de ladite fibre sont disposées dans un même plan lorsque la douille est en contact avec la butée (7) sous l'action de ses moyens de rappel (6), c'est-à-dire lorsque le connecteur n'est pas en prise avec le raccord.

10. Dispositif selon l'une quelconque des revendications précédentes, caractérisé en ce que :

— lesdits moyens de rappel (6) sont constitués par un ressort de compression monté à l'intérieur dudit logement (4) entre un épaulement de ce dernier et l'extrémité interne de ladite douille, et

— ladite butée est constituée par une bague (7) montée dans une rainure annulaire interne dudit logement et coopérant avec un épaulement de ladite douille.

## Claims

1. A connector assembly for optical fibers of the kind comprising :

— a first connector body provided with a bore (4) in which is inserted lengthwise at least one optical fiber (1), the end of this optical fiber being located near the connecting end of said connector body,

— a second connector body identical to said first connector body, having at least one optical fiber to be connected to the first one, and

— a sleeve assembly (8) comprising two identical tubular parts designed in such a way that they fit into said respective bores of said first and second connector bodies and comprising an axial channel for guiding and aligning the fibers to be connected,

characterized in that each of the connector bodies comprises :

— means (15) for mixing said fiber (1) rigidly in said bore (4), the free end of this fiber being positioned at a predetermined distance (e), seen lengthwise, from a reference surface (S) of said bore,

— a jacket (5) for guiding and protecting the fiber, provided with an axial guiding channel (12) mounted so as to glide longitudinally inside said bore between a first position where the fiber end is inside said jacket and a second position where this end has left said jacket,

— spring means (6) between said jacket (6) and said bore (4) urging said jacket towards the connecting end of said bore in order to protect the fiber end when the sleeve is not inserted in the connector body, and

— a stop (7) to prevent said jacket (5) from leaving said bore (4) under the action of said spring means (6),

furthermore characterized in that said sleeve assembly (8) comprises:

— means for moving the jacket between said first and second positions when it is inserted in the connector body and for stripping the fiber end so that it may penetrate into the axial channel of said sleeve, and

— two reference surfaces (11) intended for abutting the respective reference surfaces (S) of the bores of the two connector bodies when said tubular parts of said sleeve are inserted in said bores (4), said reference surfaces of said sleeve being designed and arranged in such a way that when said sleeve (8) is completely inserted in said bores (4), with the reference surfaces of the sleeve and the bores abutting, the fiber ends of the two connector bodies are in close contact.

2. A connector assembly according to claim 1, characterized in that each of said connector bodies contains only one fiber (1) located axially in said bore (4) and said jacket (5), and

— the axial channel of said sleeve (8) has a section, essentially identical to that of the fibers to be connected in the vicinity of the median plane (p) of the sleeve, which widens towards the sleeve ends so as to form guiding surfaces (9) for the fibers when the sleeve is inserted into the bores of the connector bodies.

3. A connector assembly according to claim 2, characterized in that :

— the cross sections of the axial channel of said sleeve (8) and of said guiding channel (12) of said jacket (5) are circular, and

— the external diameter of the guiding channel opening of said jacket is smaller than the inner diameter of the axial channel opening of said sleeve (8).

4. A connector assembly according to claim 1, in which each connector body is mounted on a multifiber cable (2 in figure 4), characterized in that :

— it comprises spacing and guiding means (22, 23) for forming a generally conical fiber bundle (27) from the fiber bundle leaving the multifiber cable,

— said jacket (5) comprising as many guiding channels (12) as there are fibers, distributed on its periphery according to the section of said fiber bundle, whereby said channels are slightly sloping with respect to the jacket axis so as to maintain the slightly tapered shape of the fibers, and

— said sleeve (28 in figure 6) comprising an axial, generally cylindrical channel the walls of which being provided with longitudinal grooves (29), whereby the distance between the bottom of said grooves and the axis of said sleeve is slightly smaller than the radius of the circle which would be defined by the free ends of said fiber bundle if said sleeve were absent and if said jacket were pushed into said bore a distance equal to the maximum run it has convered when the sleeve is completely inserted.

5. A connector assembly according to claim 4, characterized in that said bore (4) and said sleeve (28) comprise mutual angular guiding elements (26, 30) for ensuring that the free ends of the fibers of each of the connector bodies are in front of the corresponding grooves of the sleeve.

6. A connector assembly according to claim 5, characterized in that :

— said jacket (5) is provided with tronconical protrusions (26) in which are located the respective ends of said guiding channels (12) of the fibers, and

— said sleeve (28) is provided with recesses the shape of which corresponds to the ends of said grooves (29) to cooperate with said protrusions (26) when said sleeve is inserted into said bores and to ensure the correct angular positioning between these elements.

7. A connector assembly according to any one of the preceding claims, characterized in that :

— the reference surface (S) of said bore is made up of the external edge of said bore (4) located at the connecting end of said connector, and

— the reference surfaces (11) of said sleeve (8) are made up of the two sides of an external flange (10) perpendicular to the sleeve axis, the median plane (p) of which is the same as the median plane of the sleeve.

8. A connector assembly according to claim 7, characterized in that each fiber is mounted in the connector body so as to protrude with respect to the reference surface (S) of said bore a distance (e) which is equal to half the thickness of said flange.

9. A connector assembly according to any one of the preceding claims, characterized in that the external end of said jacket (5) and the end of said fiber are located in the same plane when the jacket is in contact with stop (7) due to the action of its spring means (6), that is when the connector is not engaged with the sleeve.

10. A connector assembly according to any one of the preceding claims, characterized in that :

— said spring means (6) are made up by a compression spring mounted inside said bore (4) between a shoulder of the latter and the internal end of said jacket, and

— said stop is made up of a ring (7) mounted in an internal annular groove of said bore and engaging a shoulder of said jacket.

## Ansprüche

1. Anschlußvorrichtung für optische Fasern mit den folgenden Teilen :

— ein erstes Anschlußelement mit einem zylindrischen Teil (4), in welchem der Länge nach wenigstens eine erste optische Faser (1) angeordnet ist, wobei das Ende dieser optischen Faser in der Nähe des Anschlußendes des Anschlußelementes angeordnet ist,

— ein zweites, mit dem ersten Anschlußelement identisches Anschlußelement mit wenigstens einer zweiten, mit der ersten zu verbindenden optischen Faser, und

— eine Muffe (8), mit zwei identischen zylindrischen Teilen, die in die betreffenden zylindrischen Teile des ersten und zweiten Anschlußelementes passen, und mit einem axialen Kanal zum Führen und Ausrichten der anzuschließenden Fasern,

dadurch gekennzeichnet,

— daß jedes Anschlußelement einschließt : Mittel (15) zum festen Anordnen der Faser (11) in dem zylindrischen Teil (4), wobeil sich das freie Ende dieser Faser, längsmäßig gesehen, in einem vorbestimmten Abstand (e) von einer Stirn-Bezugsoberfläche (S) des zylindrischen Teiles befindet,

— eine mit einem axialen Führungskanal (12) ausgerüstete Fassung (5) zum Führen und zum Schutz der Faser, die der Länge nach im Innern des zylindrischen Teiles (4) zwischen einer ersten Stellung, bei der das Faserende im Innern der Fassung liegt, und einer zweiten Stellung, bei der das Faserende außerhalb der Fassung liegt, gleitend angeordnet ist,

— elastische Halterungsmittrel (6) zwischen der Fassung (5) und dem zylindrischen Teil (4), die versuchen, die Fassung in Richtung des Anschlußendes des Teiles zu drücken um das Faserende zu schützen wenn die Muffe nicht in das Anschlußelement eingepaßt ist, und

— einen Anschlag (7) der die Fassung (5) daran hindert, unter der Einwirkung der Halterungsmittel (6) aus der Höhlung zu treten,

weiterhin dadurch gekennzeichnet, daß die Muffe (8) einschließt :

— Mittel zum Verschieben der Fassung zwischen der ersten und zweiten Stellung wenn sie in das Anschlußelement eingefügt ist und damit zum Freilegen des Faserendes, damit dieses in den axialen Kanal der Muffe eindringen kann, und

— zwei Bezugsoberflächen (11) die die betreffenden Stirn-Bezugsoberflächen (S) der zylindrischen Teile der zwei Anschlußelemente berühren können, wenn die zylindrischen Teile der Muffe in die zylindrischen Teile (4) der Anschlußelemente eingefügt werden, wobei die Bezugsoberflächen der Muffe so ausgelegt sind, daß die Faserenden der zwei Anschlußelemente genau in Kontakt kommen, wenn die Muffe (8) vollständig in die zylindrischen Teile eingepaßt ist, d.h. wenn die Bezugsoberfläche der Muffe und der Höhlungen sich berühren.

2. Vorrichtung nach Anspruch 1, dadurch gekennzeichnet, daß jedes der Anschlußelemente nur eine Faser (1) enthält, die in der Höhlung (4) und der Fassung (5) axial angeordnet ist, und daß

— der axiale Kanal der Muffe (8) in der Nähe der Mittelebene (p) der Muffe einen dem der anzuschließenden Fasern im wesentlichen identischen Querschnitt aufweist, der sich gegen die Muffenenden erweitert, so daß er für die Fasern Führungsoberflächen (9) bildet, wenn die Muffe in die zylindrische Teile des Anschlußelementes eingefügt wird.

3. Vorrichtung nach Anspruch 2, dadurch gekennzeichnet,

— daß die Querschnitte des axialen Kanales der Muffe (8) und des Führungskanals (12) der Fassung (5) kreisförmig sind, und

— der äußere Durchmesser der Eintrittsöffnung des Führungskanals der Fassung kleiner ist als der innere Durchmesser der Eintrittsöffnung des axialen Kanals der Muffe (8).

4. Vorrichtung nach Anspruch 1, in welcher jedes Anschlußelement auf einem Vielfaserkabel (2, Fig. 4) angeordnet ist, dadurch gekennzeichnet,

— daß sie Abstands- und Führungsmittel (22, 23) einschließt zum Bilden eines im allgemeinen konischen Faserbündels (27) aus dem aus dem Vielfaserkabel austretenden Faserbündel,

— daß die Fassung (5) die gleiche Anzahl Führungskanäle (12) aufweist, wie Fasern vorhanden sind, die auf dem Umfang gemäß dem Querschnitt des Faserbündels verteilt sind, wobei die Kanäle gegenüber der Fassungsachse eine leichte Neigung aufweisen, um dem Faserbündel eine leicht konische Form zu erhalten, und

— daß die Muffe (28, Fig. 6) mit einem axialen, im allgemeinen zylinderförmigen Kanal versehen ist, in dessen Wänden sich Längsrillen (29) befinden, wobei der Abstand zwischen dem Rillenboden und der Muffenachse etwas kleiner ist als der Radius des Kreises, der von den freien Enden des Faserbündels bestimmt würde, wenn die Muffe fehlen würde und wenn man die Fassung eine derartige Strecke in das zylindrische Teil einschieben würde daß die Muffe vollständig eingepaßt wäre.

5. Vorrichtung nach Anspruch 4, dadurch gekennzeichnet, daß das zylindrische Teil (4) und die Muffe (28) gegenseitige eckige Führungselemente (26, 30) haben, die dafür sorgen, daß die freien Faserenden eines jeden Anschlußelementes vor die entsprechenden Rillen der Muffe zu stehen kommen.

6. Vorrichtung nach Anspruch 5, dadurch gekennzeichnet,

— daß die Fassung (5) mit stummelförmigen Stiften (26) versehen ist, auf deren kleinster Grundfläche die betreffenden Führungskanäle (12) der Fasern herauskommen, und

— die Muffe (28) den Enden der Rillen (29) entsprechende Aussparungen (30) hat, um mit den Stiften (26) dann in Eingriff zu kommen, wenn die Muffe ganz in die zylindrischen Teile eingepaßt ist, und um die richtige Winkelausrichtung zwischen diesen Elementen sicherzustellen.

7. Vorrichtung nach einem der vorhergehenden Ansprüche, dadurch gekennzeichnet,

— daß die Bezugsoberfläche (S) des am Verbindungsende des Anschlußelementes befindlichen zylindrischen Teiles durch die Stirnfläche des Zylinders (4) gebildet wird, und

— die Bezugsoberflächen (11) der Muffe (8) von den beiden Flächen eines äußeren, senkrecht zur Muffenachse liegenden Flansches (10) gebildet werden, dessen Mittelebene (p) sich mit der Mittelebene der Muffe deckt.

8. Vorrichtung nach Anspruch 7, dadurch gekennzeichnet, daß jede Faser so in das Anschlußelement eingesetzt ist, daß sie über die Bezugsoberfläche (S) der Höhlung um eine der Hälfte der Dicke des Flansches gleichen Länge hinausragt.

9. Vorrichtung nach einem der obigen Ansprüche, dadurch gekennzeichnet, daß das äußere Ende der Fassung (5) und das Ende der Faser in derselben Ebene angeordnet sind, wenn die Fassung mit dem Anschlag unter Einwirkung der Halterungsmittel (6) in Berührung steht, d.h. wenn das Anschlußelement nicht mit der Muffe in Eingriff steht.

10. Vorrichtung nach einem der obigen Ansprüche, dadurch gekennzeichnet,

— daß die Halterungsmittel (6) durch eine Kompressionsfeder gebildet werden, die im Innern des zylindrischen Teiles (4) zwischen einer Schulter derselben und dem inneren Ende der Fassung angebracht ist, und

— der Anschlag von einem Ring (7) gebildet wird, der in einer inneren ringförmigen Rille des zylindrischen Teiles angeordnet ist und mit einer Schulter der Fassung in Eingriff kommt.

## FIG. 1

## FIG. 2

FIG. 3

FIG. 5

FIG. 6

# FIG. 4

0 008 329